# FASCICULE DE BREVET EUROPEEN

(11) **EP 0 945 206 B1**
(45) Date de publication et mention de la délivrance du brevet: **05.06.2002**
(21) Numéro de dépôt: 99420075.6
(22) Date de dépôt: 25.03.1999
(51) Int. Cl.: B23D 77/02

(54) **Alésoir**
Reibahle
Reamer

(30) Priorité: 26.03.1998 FR 9804016
(43) Date de publication de la demande: 29.09.1999
(73) Titulaire: BELIN Yvon sa, 01590 Lavancia Epercy (FR)
(72) Inventeur: Coral, Hilaire, Bouvent, 01100 Oyonnax (FR)
(74) Mandataire: Poncet, Jean-François

(56) Documents cités:
- DE-A- 4 330 988
- DE-A- 4 343 404
- US-A- 1 861 498

## Description

La présente invention concerne les alésoirs pour machine, permettant d'usiner un ou plusieurs diamètres d'alésage dans une pièce.

Les alésoirs sont généralement formés d'une monture se développant selon un axe longitudinal de rotation et susceptible d'être fixée de façon amovible à des moyens de support et d'entraînement en rotation. La monture porte au moins une plaquette de coupe, à arête d'alésage périphérique longitudinale longue, fixée en une première position angulaire sur la monture pour usiner un diamètre d'alésage. Généralement, on prévoit sur la même monture, pour usiner simultanément et plus rapidement le même diamètre d'alésage, une pluralité de plaquettes de coupe fixées selon plusieurs positions angulaires réparties autour de l'axe longitudinal. Des exemples de tels alésoirs, conformément au préambule de la revendication 1, sont décrits dans les documents US 1 861 498 A, DE 43 43 404 A et DE 43 30 988 A.

Pour assurer une coupe efficace et pour réaliser un état de surface approprié de l'alésage, les plaquettes de coupe de l'alésoir ont généralement une arête d'alésage longitudinale très légèrement inclinée dans le sens d'une conicité inverse, par exemple selon un angle de cône tel que le diamètre à l'extrémité distale d'arête de coupe est de 2 à 5 centièmes de millimètre plus grand que le diamètre à l'extrémité proximale d'arête de coupe, pour un diamètre nominal de 100 millimètres.

Dans certaines applications, la pièce dans laquelle est usiné l'alésage doit recevoir un joint annulaire d'étanchéité venant porter sur le diamètre d'alésage. Pour améliorer le maintien mécanique du joint annulaire d'étanchéité, on est alors conduit à dégrader localement la surface de l'alésage sur laquelle vient porter le joint, pour augmenter le coefficient de frottement au contact entre le joint et la surface de l'alésage. La réalisation d'une surface dégradée est d'autant plus nécessaire lorsque l'alésoir comporte des arêtes de coupe en diamant polycristallin, car les états de surface obtenus par de tels alésoirs sont particulièrement lisses.

L'opération de dégradation de la surface d'alésage s'effectue généralement par une seconde étape d'usinage, au moyen d'un outil différent de l'alésoir, postérieurement à la première étape de réalisation de l'alésage au moyen de l'alésoir. Il en résulte une multiplication des étapes d'usinage, conduisant à une baisse de rendement de production et à une augmentation du coût de production.

Pour réaliser la surface dégradée d'alésage susceptible de recevoir un joint d'étanchéité, on a aussi tenté d'utiliser un alésoir ayant une arête d'alésage longitudinale à conicité inverse accentuée, selon un angle de cône d'environ 5°. On obtient effectivement un état de surface dégradé susceptible de présenter un coefficient de frottement approprié, mais on constate que le diamètre de l'alésage est alors également altéré, la valeur du diamètre ne pouvant pas être réalisée de façon suffisamment précise pour tenir les tolérances nécessaires dans les opérations d'alésage.

Le problème proposé par la présente invention est de concevoir une nouvelle structure d'alésoir permettant de réaliser, en une seule opération, à la fois un alésage ayant un diamètre précis et au moins un tronçon à état de surface dégradé.

Selon l'invention, on cherche à conserver les qualités satisfaisantes de l'alésoir, permettant la réalisation d'un alésage dont le diamètre est connu avec une grande précision, compatible avec les tolérances nécessaires, l'alésoir restant facile à fabriquer selon les procédés habituels.

Egalement, selon l'invention, on cherche à ce que les moyens de réalisation de l'état de surface dégradé ne produisent pas de bavures ou particules de matière susceptibles de se détacher ultérieurement lors de l'utilisation de la pièce.

Pour atteindre ces objets ainsi que d'autres, la présente invention prévoit un alésoir équipé d'au moins une plaquette de coupe à arête d'alésage périphérique longitudinale longue fixée en une première position angulaire sur une monture pour usiner un diamètre d'alésage, et ayant au moins une dent de détérioration, fixée sur ladite monture, et adaptée pour creuser un sillon dans ledit diamètre d'usinage usiné par ladite plaquette de coupe.

La dent de détérioration est de préférence positionnée sur la monture selon un diamètre supérieur ou égal au diamètre de la plaquette de coupe. Selon un mode de réalisation avantageux, permettant d'adapter la dégradation de l'état de surface en fonction des besoins, la dent de détérioration est fixée sur la monture par des moyens permettant son réglage en diamètre.

Selon un mode de réalisation préféré, la dent de détérioration est positionnée sur la monture dans la même zone d'usinage que la plaquette de coupe, selon une seconde position angulaire décalée angulairement par rapport à ladite première position angulaire. De cette façon, l'arête d'alésage de la plaquette de coupe a une double fonction : selon la première fonction, elle réalise l'usinage de l'alésage, de façon traditionnelle ; selon la seconde fonction, elle réalise l'ébavurage du sillon formé par la dent de détérioration, évitant la formation de microparticules susceptibles de se détacher ultérieurement lors de l'utilisation de la pièce.

Dans ce cas, il est avantageux de positionner la dent de détérioration selon un léger décalage longitudinal postérieur par rapport à la zone d'attaque de la plaquette de coupe. Le décalage postérieur peut, par exemple, être d'environ 0,4 millimètre.

Selon un mode de réalisation avantageux, la dent de détérioration présente un profil longitudinal limité par une arête antérieure radiale se raccordant par un rayon ou un chanfrein faible ou nul à une arête postérieure inclinée.

Un meilleur équilibrage mécanique est réalisé en prévoyant au moins deux arêtes de coupe réparties angulairement autour de la monture pour usiner le même diamètre d'alésage, et au moins une dent de détérioration adaptée pour creuser un sillon dans ledit diamètre d'alésage.

D'autres objets, caractéristiques et avantages de la présente invention ressortiront de la description suivante de modes de réalisation particuliers, faite en relation avec les figures jointes, parmi lesquelles:
- la figure 1 est une vue de côté d'une portion d'extrémité d'alésoir selon un mode de réalisation de la présente invention ;
- la figure 2 est une vue en bout de la portion d'extrémité d'alésoir de la figure 1 ;
- la figure 3 est une vue de côté partielle à plus grande échelle de la portion d'alésoir de la figure 1, dans la zone de la dent de détérioration selon l'invention ;
- la figure 4 est une vue à plus grande échelle montrant le profil longitudinal d'une dent de détérioration selon un mode de réalisation de la présente invention ; et
- la figure 5 est une vue de côté d'un alésoir selon un mode de réalisation de l'invention.

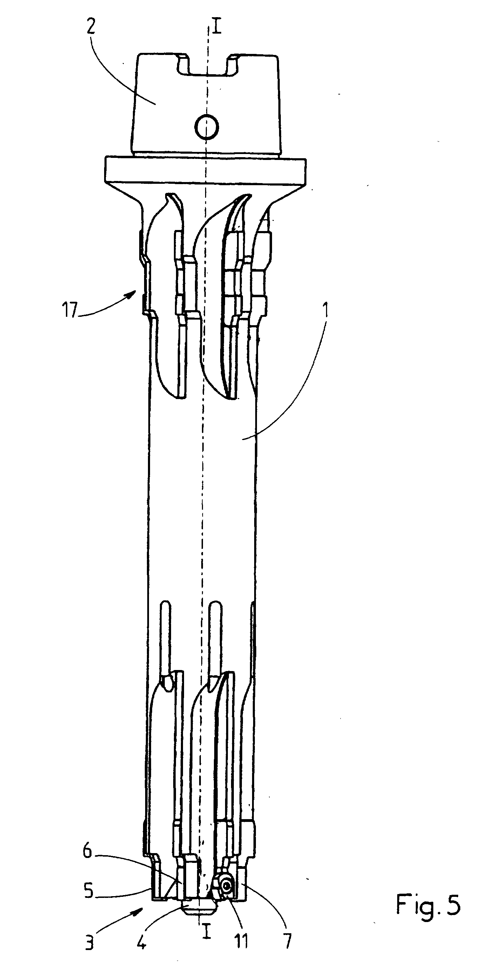

Dans le mode de réalisation illustré sur la figure 5, un alésoir selon la présente invention comprend une monture 1, généralement en forme de cylindre allongé selon un axe longitudinal de rotation I-I. La première extrémité 2 de la monture 1 est conformée pour se fixer sur des moyens de support et d'entraînement en rotation, non représentés sur la figure, permettant de tenir l'alésoir selon l'axe longitudinal de rotation I-I et de l'entraîner en rotation selon cet axe à une vitesse de rotation appropriée pour l'usinage d'une pièce.

La seconde extrémité 3 de la monture 1 comporte un prolongement central 4 de plus faible diamètre, coaxial avec l'axe longitudinal de rotation I-I, et conformé pour constituer une piste périphérique de réglage. En arrière du prolongement central 4, la monture 1 comporte une série de logements périphériques conformés pour recevoir et fixer des plaquettes de coupe à arêtes d'alésage périphériques longitudinales longues, fixées en des positions angulaires réparties régulièrement autour de l'axe longitudinal de rotation I-I.

L'alésoir doit comprendre au moins une plaquette de coupe à arête d'alésage périphérique longitudinale longue adaptée pour usiner un diamètre d'alésage, de façon connue. Il est toutefois possible de prévoir plusieurs plaquettes de coupe réparties autour de l'axe longitudinal de rotation I-I. Le mode de réalisation illustré sur les figures comprend quatre plaquettes de coupe repérées par les références numériques respectives 5, 6, 7 et 8.

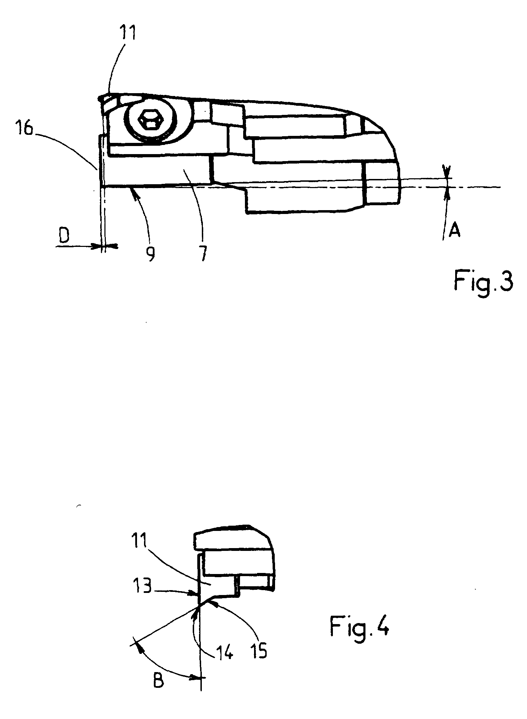

Comme on le voit mieux sur la figure 3 notamment en ce qui concerne la plaquette de coupe 7, chaque plaquette de coupe comprend une arête d'alésage périphérique longitudinale 9 relativement longue, par exemple de 10 à 15 millimètres de longueur, généralement parallèle à l'axe longitudinal de rotation I-I, ou de préférence très légèrement inclinée en cône inversé, d'angle A faible tel que le diamètre de la portion distale ou antérieure de l'arête d'alésage périphérique longitudinale 9 soit d'environ 2 à 5 centièmes de millimètre plus grand que le diamètre de la portion proximale ou postérieure de l'arête d'alésage périphérique longitudinale 9, pour un alésoir de diamètre nominal égal 100 millimètres.

Les plaquettes de coupe 5-8 peuvent avoir une forme connue dans les alésoirs habituellement utilisés, et peuvent ainsi être réalisées, positionnées sur la monture 1 puis rectifiées par des procédés connus, avec une arête de coupe 9 pouvant être en tout matériau approprié, avantageusement en diamant polycristallin sur un substrat en carbure de tungstène brasé sur un corps de plaquette en acier.

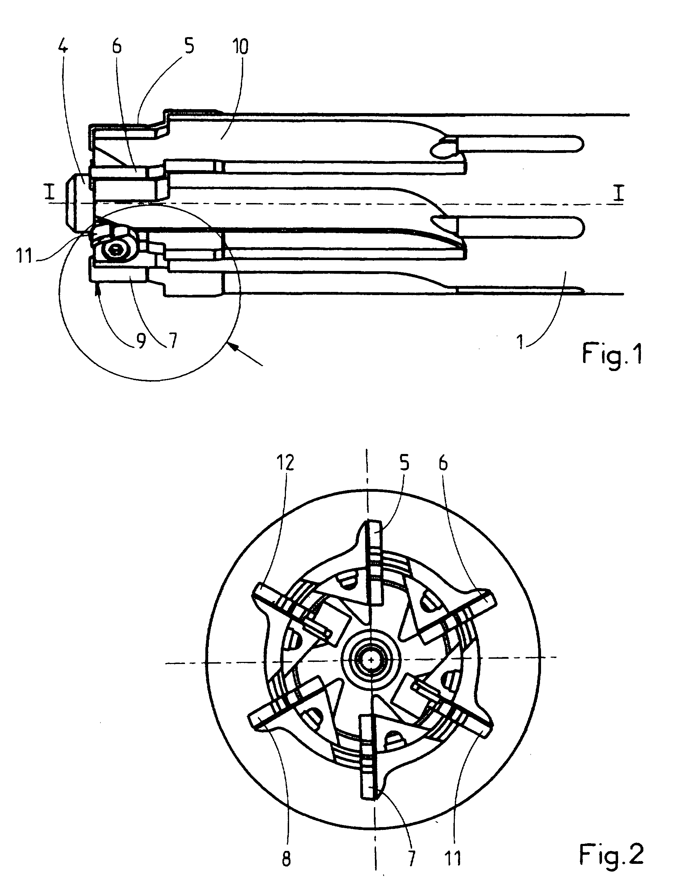

Comme illustré sur la figure 1 notamment, chaque plaquette de coupe telle que la plaquette 6 est associée à un dégagement 10 postérieur pour l'évacuation des copeaux.

L'alésoir selon l'invention comprend en outre au moins une dent de détérioration, fixée sur la monture 1, et adaptée pour creuser un sillon dans le diamètre d'usinage usiné par la ou les plaquettes de coupe 5-8.

Dans le mode de réalisation illustré sur les figures, l'alésoir comprend deux dents de détérioration 11 et 12, diamétralement opposées l'une par rapport à l'autre autour de l'axe longitudinal de rotation I-I, et fixées chacune dans un logement correspondant de la monture 1 par des moyens de fixation similaires de ceux qui tiennent les plaquettes de coupe 5-8.

Chaque dent de détérioration 11 ou 12 est positionnée sur la monture 1 selon un diamètre supérieur ou égal au diamètre des plaquettes de coupe 5-8. De préférence, les moyens de fixation des dents de détérioration 11 et 12 permettent leur réglage en diamètre, de façon à choisir ou adapter la détérioration que l'on désire réaliser sur le diamètre d'alésage.

Dans le mode de réalisation avantageux de l'invention tel qu'illustré sur les figures, les dents de détérioration 11 et 12 sont positionnées sur la monture 1 dans la même zone d'usinage que les plaquettes de coupe 5-8, de façon à travailler simultanément lors de la réalisation de l'usinage. Egalement, les dents de détérioration 11 et 12 sont disposées selon des positions angulaires décalées angulairement par rapport aux positions angulaires des plaquettes de coupe 5-8. Ainsi, dans le cas d'un alésoir ayant au moins une plaquette de coupe 5 disposée selon une première position angulaire, l'alésoir comprend au moins une dent de détérioration 11 positionnée selon une seconde position angulaire décalée angulairement par rapport à ladite première position angulaire de la plaquette de coupe 5.

Dans le mode de réalisation illustré sur la figure 4, la dent de détérioration 11 présente un profil longitudinal limité par une arête antérieure radiale 13, se raccordant par un rayon 14 faible ou nul à une arête postérieure 15 inclinée. L'arête postérieure 15 est inclinée par rapport à l'arête antérieure radiale 13 selon un angle B égal à 60° environ.

De préférence, comme illustré sur la figure 3 à plus grande échelle, la dent de détérioration 11 est positionnée légèrement en recul par rapport aux plaquettes de coupe telles que la plaquette 7, selon un décalage longitudinal D postérieur par rapport à la zone d'attaque 16 de la plaquette de coupe 7. Le décalage longitudinal D peut avanteusement être choisi en fonction du pas d'avance de l'alésoir pendant la réalisation d'un alésage ; dans les conditions fréquentes d'usinage, le décalage D peut être d'environ 0,4 millimètre. De la sorte, la dent de détérioration 11 travaille dans une zone d'alésage déjà usinée par les plaquettes de coupe 5-8, et nécessite peu d'effort pour creuser un sillon dans l'alésage pré-usiné par les plaquettes de coupe 5-8. Le décalage longitudinal D postérieur est de préférence suffisamment faible pour que les plaquettes de coupe 5-8 poursuivent l'usinage après passage de la dent de détérioration 11, assurant un ébavurage des bords du sillon.

Dans le mode de réalisation illustré sur la figure 5, l'alésoir comporte une première zone d'usinage prévue à la seconde extrémité 3, avec les plaquettes de coupe 5-8 et les dents de détérioration telles que la dent 11. En outre, au voisinage de la première extrémité 2, l'alésoir comprend une seconde zone d'alésage 17, pour réaliser d'autres diamètres d'alésage décalés longitudinalement par rapport aux premiers diamètres d'alésage réalisés par la zone de seconde extrémité 3. Ainsi, on comprend que l'alésoir selon l'invention peut comporter plusieurs zones d'alésage, l'une au moins d'entre elles comportant des dents de détérioration telles que les dents 11 et 12.

D'autres formes de dent de détérioration peuvent être envisagées. Par exemple, dans le mode de réalisation illustré sur les figures, le rayon 14 est d'environ 0,1 millimètre, mais on pourrait imaginer un rayon 14 plus important, ou une dent ayant un chanfrein faible ou nul, ou même une dent ayant une arête longitudinale courte. Dans tous les cas, la dent de détérioration 11 ou 12 est beaucoup plus courte que l'arête de coupe 9 des plaquettes de coupe 5-8, dans le sens longitudinal de l'axe longitudinal de rotation I-I. En pratique, l'arête longitudinale doit rester plus courte que le pas d'usinage ou valeur de l'avance de l'alésoir pendant une révolution.

Lors de l'utilisation, l'alésoir est entraîné en rotation rapide autour de l'axe longitudinal de rotation I-I, et en avance lente le long de l'axe longitudinal de rotation I-I. Les plaquettes de coupe 5-8 réalisent un alésage dont le diamètre est défini avec précision. Simultanément, dans la même zone d'alésage, les dents de détérioration 11 et 12 creusent des sillons dans la surface d'alésage réalisée par les plaquettes de coupe 5-8. On peut ainsi réaliser un alésage à tronçon dont l'état de surface est détérioré, améliorant la tenue d'une pièce rapportée telle qu'un joint annulaire d'étanchéité. La réalisation de cette surface dégradée est assurée par une seule étape d'usinage, permettant d'obtenir à la fois un gain de temps d'usinage et une meilleure précision.

Le procédé d'usinage selon l'invention, pour réalisation d'un alésage à zone de surface dégradée, comprend ainsi une étape commune d'usinage d'alésage et de dégradation de surface, réalisée au moyen d'une pluralité d'arêtes d'alésage longitudinales, telles que l'arête d'alésage longitudinale 9, associées sur une même monture 1 à au moins une dent de détérioration 11 ou 12 creusant un sillon dans l'alésage usiné par les arêtes d'alésage longitudinales telles que l'arête d'alésage longitudinale 9.

La présente invention n'est pas limitée aux modes de réalisation qui ont été explicitement décrits, mais elle en inclut les diverses variantes et généralisations contenues dans le domaine des revendications ci-après.

## Revendications

1. Alésoir équipé d'au moins une plaquette de coupe (5-8) à arête d'alésage (9) périphérique longitudinale longue fixée en une première position angulaire sur une monture (1) pour usiner un diamètre d'alésage, **caractérisé en ce qu'**il comprend au moins une dent de détérioration (11, 12), fixée sur ladite monture (1), et adaptée pour creuser un sillon dans ledit diamètre d'usinage usiné par ladite plaquette de coupe (5-8).

2. Alésoir selon la revendication 1, **caractérisé en ce que** la dent de détérioration (11, 12) est positionnée sur la monture (1) selon un diamètre supérieur ou égal au diamètre de la plaquette de coupe (5-8).

3. Alésoir selon la revendication 2, **caractérisé en ce que** la dent de détérioration (11, 12) est fixée sur la monture (1) par des moyens permettant son réglage en diamètre.

4. Alésoir selon l'une quelconque des revendications 1 à 3, **caractérisé en ce que** la dent de détérioration (11, 12) est positionnée sur la monture (1) dans la même zone d'usinage que la plaquette de coupe (5-8) selon une seconde position angulaire décalée angulairement par rapport à ladite première position angulaire de plaquette de coupe (5-8).

5. Alésoir selon l'une quelconque des revendications 1 à 4, **caractérisé en ce qu'**il comprend au moins deux plaquettes de coupe (5, 7) réparties angulairement autour de la monture (1) pour usiner le même diamètre d'alésage, et au moins une dent de détérioration (11) adaptée pour creuser un sillon dans ledit diamètre d'alésage.

6. Alésoir selon la revendication 5, **caractérisé en ce que** la dent de détérioration (11) est positionnée selon un décalage longitudinal (D) postérieur par rapport à la zone d'attaque (16) de la plaquette de coupe (7).

7. Alésoir selon la revendication 6, **caractérisé en ce que** le décalage longitudinal (D) est d'environ 0,4 millimètre.

8. Alésoir selon l'une quelconque des revendications 1 à 7, **caractérisé en ce que** la dent de détérioration (11, 12) présente un profil longitudinal limité par une arête antérieure radiale (13) se raccordant par un rayon ou un chanfrein (14) faible ou nul à une arête postérieure (15) inclinée.

9. Alésoir selon la revendication 8, **caractérisé en ce que** l'arête postérieure (15) est inclinée par rapport à l'arête antérieure radiale (13) selon un angle (B) égal à 60° environ.

10. Procédé d'usinage d'un alésage à zone dégradée, **caractérisé en ce qu'**il comprend une étape commune d'usinage d'alésage et de dégradation de surface, réalisée au moyen d'une pluralité d'arêtes d'alésage longitudinales (9) associées sur une même monture (1) à au moins une dent de détérioration (11, 12) creusant un sillon dans l'alésage usiné par les arêtes d'alésage longitudinales (9).

## Patentansprüche

1. Reibahle mit wenigstens einem Schneidplättchen (5-8), das eine peripherische, sich in Längsrichtung erstreckende, lange Schneidkante (9) aufweist und für die spanabhebende Bearbeitung eines Bohrungsdurchmessers an einem Schaft (1) in einer ersten Winkelstellung befestigt ist, **dadurch gekennzeichnet, daß** die Reibahle wenigstens einen Abnahmezahn (11, 12) hat, der an dem Schaft (1) befestigt ist und dazu dient, in dem durch das Schneidplättchen (5-8) bearbeiteten Durchmesser eine Rille auszukehlen.

2. Reibahle nach Anspruch 1, **dadurch gekennzeichnet, daß** der Abnahmezahn (11, 12) an dem Schaft (1) auf einem Durchmesser angebracht ist, der größer oder gleich dem Durchmesser des Schneidplättchens (5-8) ist.

3. Reibahle nach Anspruch 2, **dadurch gekennzeichnet, daß** der Abnahmezahn (11, 12) an dem Schaft (1) durch Mittel befestigt ist, die eine Einstellung des Durchmessers gestatten.

4. Reibahle nach einem der Ansprüche 1 bis 3, **dadurch gekennzeichnet, daß** der Abnahmezahn (11, 12) an dem Schaft (1) in demselben Bearbeitungsbereich wie das Schneidplättchen (5-8) in einer zweiten Winkelstellung angeordnet ist, welche zur ersten Winkelstellung des Schneidplättchens (5-8) winklig versetzt ist.

5. Reibahle nach einem der Ansprüche 1 bis 4, **dadurch gekennzeichnet, daß** diese wenigstens zwei Schneidplättchen (5, 7), die am Umfang des Schaftes (1) mit Winkelabstand zueinander verteilt angebracht sind, um denselben Bohrungsdurchmesser zu bearbeiten, sowie wenigstens einen Abnahmezahn (11) aufweist, über welchen eine Rille in den Bohrungsdurchmesser eingearbeitet werden kann.

6. Reibahle nach Anspruch 5, **dadurch gekennzeichnet, daß** der Abnahmezahn (11) bezüglich der Angriffszone (16) des Schneidplättchens (7) um eine Längsverschiebung (D) nach hinten versetzt angeordnet ist.

7. Reibahle nach Anspruch 6, **dadurch gekennzeichnet, daß** die Längsverschiebung (D) etwa 0,4 mm beträgt.

8. Reibahle nach einem der Ansprüche 1 bis 7, **dadurch gekennzeichnet, daß** der Abnahmezahn (11, 12) ein Längsprofil hat, das von einer vorderen, radialen Schneidkante (13) begrenzt ist, die über einen kleinen Radius oder eine kleine Fase (14), deren Wert auch Null sein kann, mit einer hinteren, schrägen Schneidkante (15) verbunden ist.

9. Reibahle nach Anspruch 8, **dadurch gekennzeichnet, daß** die hintere Schneidkante (15) zur vorderen, radialen Schneidkante (13) um einen Winkel (B) von etwa 60° geneigt ist.

10. Verfahren zur spanabhebenden Bearbeitung einer Bohrung mit einem ausgehöhlten Bereich, **gekennzeichnet durch** eine gemeinsame Bearbeitungsstufe für das Ausbohren und die Aushöhlung der Oberfläche, welche durchgeführt wird mit Hilfe einer Mehrzahl von sich in Längsrichtung erstreckenden Schneidkanten (9), denen auf ein und demselben Schaft (1) wenigstens ein Abnahmezahn (11, 12) zugeordnet ist, welcher in der **durch** die in Längsrichtung verlaufenden Schneidkanten (9) bearbeitete Bohrung eine Rille auskehlt.

## Claims

1. A reamer equipped with at least one cutting plate (5-8) with a long longitudinal peripheral boring edge (9) fixed in a first angular position to a mount (1) for machining a bore diameter, **characterized in that** it includes at least one deterioration tooth (11, 12), fixed to said mount (1), and adapted to excavate a groove in said machining diameter machined by said cutting plate (5-8).

2. A reamer according to claim 1, **characterized in that** the deterioration tooth (11, 12) is positioned on the mount (1) according to a diameter which is greater than or equal to the diameter of the cutting plate (5-8).

3. A reamer according to claim 2, **characterized in that** the deterioration tooth (11, 12) is fixed to the mount (1) by means enabling its diameter to be adjusted.

4. A reamer according to any of claims 1 to 3, **characterized in that** the deterioration tooth (11, 12) is positioned on the mount (1) in the same machining area as the cutting plate (5-8) and in a second angular position offset angularly relative to said first angular position of the cutting plate (5-8).

5. A reamer according to any of claims 1 to 4, **characterized in that** it includes at least two cutting plates (5, 7) arranged angularly around the mount (1) to machine the same boring diameter, and at least one deterioration tooth (11) adapted to cut a groove in said boring diameter.

6. A reamer according to claim 5, **characterized in that** the deterioration tooth (11) is positioned with a posterior longitudinal offset (D) relative to the leading area (16) of the cutting plate (7).

7. A reamer according to claim 6, **characterized in that** the longitudinal offset (D) is approximately 0.4 millimeters.

8. A reamer according to any of claims 1 to 7, **characterized in that** the deterioration tooth (11, 12) has a longitudinal profile limited by a radial anterior edge (13) joined by a small or zero radius or bevel (14) to an inclined posterior edge (15).

9. A reamer according to claim 8, **characterized in that** the posterior edge (15) is inclined relative to the radial anterior edge (13) at an angle (B) equal to approximately 60°.

10. A method of machining a bore with a degraded area, **characterized in that** it includes a common step of boring machining and surface degradation, carried out by means of a plurality of longitudinal boring edges (9) associated on the same mount (1) with at least one deterioration tooth (11, 12) cutting a groove in the bore machined by the longitudinal boring edges (9).
